# EUROPEAN PATENT SPECIFICATION

(11) **EP 1 825 383 B1**
(45) Date of publication and mention of the grant of the patent: **15.04.2015**
(21) Application number: 05851690.7
(22) Date of filing: 15.11.2005
(51) Int. Cl.: G06F 9/30

(54) **DATA FILE STORING MULTIPLE DATA TYPES WITH CONTROLLED DATA ACCESS**
DATEI ZUR SPEICHERUNG MEHRERER DATENTYPEN MIT GESTEUERTEM DATENZUGRIFF
FICHIER DE DONNEES STOCKANT DES TYPES DE DONNEES MULTIPLES AVEC UN ACCES AUX DONNEES CONTROLE

(30) Priority: 17.11.2004 US 628647 P
(43) Date of publication of application: 29.08.2007
(73) Proprietor: Qualcomm Incorporated, San Diego, CA 92121 (US)
(72) Inventor: HOKENEK, Erdem, Yorktown Heights, NY 10598 (US); MOUDGILL, Mayan, White Plains, NY 10607 (US); GLOSSNER, C.,John, Carmel, NY 10512 (US); SCHULTE, Michael, J., Madison, WI 53717 (US)
(74) Representative: Strehl Schübel-Hopf & Partner
(86) International application number: PCT/US2005/041419
(87) International publication number: WO 2006/071385

(56) References cited:
- EP-A- 0 945 783
- WO-A-03/085516
- US-A- 5 819 057
- US-A1- 2002 174 319
- US-B2- 6 349 379
- AGGARWAL A ET AL: "Energy efficient asymmetrically ported register files" PROCEEDINGS 2003 IEEE INTERNATIONAL CONFERENCE ON COMPUTER DESIGN: VLSI IN COMUTERS AND PROCESSORS. ICCD 2003. SAN JOSE, CA, OCT. 13 - 15, 2003; [INTERNATIONAL CONFERENCE ON COMPUTER DESIGN], LOS ALAMITOS, CA, IEEE COMP. SOC, US, 13 October 2003 (2003-10-13), pages 2-7, XP010662987 ISBN: 978-0-7695-2025-4
- GONZALEZ R ET AL: "A content aware integer register file organization" COMPUTER ARCHITECTURE, 2004. PROCEEDINGS. 31ST ANNUAL INTERNATIONAL SY MPOSIUM ON MUNCHEN, GERMANY JUNE 19-23, 2004, PISCATAWAY, NJ, USA,IEEE, 19 June 2004 (2004-06-19), pages 314-324, XP010769381 ISBN: 978-0-7695-2143-5

## Description

### BACKGROUND AND SUMMARY OF THE INVENTION

The present disclosure is directed to digital processors and more specifically to data files of the processors which are capable of storing different data types.

Almost all programmable digital processors use register files to store data on the processor. See J.L. Hennessy and D.A. Patterson, Computer Architecture: A Quantitative Approach, Third Edition, Morgan Kaufmann Publishes, 2003. On most processors, integer register files with *n*-bit registers can store integer data types with sizes less than or equal to *n*. However, on these processors, the smaller data types are accessed using the same mechanism as the larger data type (*i.e.,* all *n* bits of data are read or written). Thus, no power savings is achieved for the smaller data types. Some register files store both integer and floating-point data types. *See* V.Y. Gorshtein and O.A. Efremova, "Method and Apparatus for Conflict-Free Execution of Integer and Floating-Point Operations with a Common Register File," and United States Patent No. 6,668,316, December 23, 2003. However, these register files do not reduce power dissipation by allowing only certain portions of the register file to be accessed based on the operand data type.

Instruction set processors typically provide support for a wide variety of data types. On instruction set processors for digital signal processing and multimedia applications, common data types include integers, fractions, and mixed numbers. These data-types are referred to as fixed-point, since the binary point is in a fixed position. Data types typically come in a variety of sizes (e.g., 8, 16, 32, 40, or 64 bits). Data types with larger sizes can be used to represent a larger range of number or numbers with more accuracy, but they require more storage and larger function units. Data types with smaller sizes require less storage and smaller functional units, but do not provide as much range or accuracy.

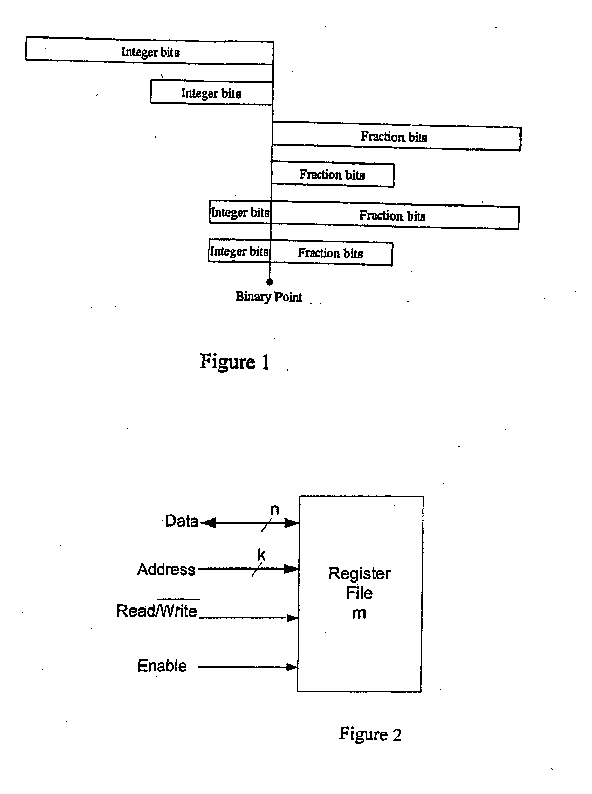

Figure 1 shows a variety of data types. The top two data types correspond to integers, the next two data types correspond to fractions, and the bottom two data types correspond to mixed numbers. In Figure 1, the least significant bit of the number is on the right and the most significant bit is on the left. With integers, all of the bits of the number are to the left of the binary point. Unsigned *n*-bit integers have a range from 0 to 2ⁿ-1 and two's complement *n*-bit integers have a range from -2ⁿ⁻¹ to 2ⁿ⁻¹-1. With unsigned fractions, all of the bits of the number are to the right of the binary point, while with two's complement fractions (not shown in Figure 1) there is a sign bit to the left of the binary point and the rest of the bits are to the right of the binary point. Unsigned *n*-bit fractions have a range from 0 to 1-2ⁿ and two's complement *n*-bit fractions have a range from -1 to 1-2ⁿ⁻¹. Mixed numbers have integer bits to the left of the binary point and fraction bits to the right of the binary point. An unsigned mixed with *i* integer bits and (*n*-*i*) fraction bits has a range from 0 to 2ⁱ-2⁻ⁿ⁺ⁱ, and a two's complement mixed number has a range from -2ⁱ⁻¹ to 2ⁱ⁻¹-2⁻ⁿ⁺ⁱ⁻¹.

In Figure 1, each type of number is shown with a longer data type and a shorter data type. In practice, there may be more than two sizes for each type of number. On instruction set processors, different data types may be stored in different register files. For example, on general-purpose processors integer and floating-point data types typically have separate register files. This approach, however, typically increases the area and power consumption of the processor, and may also degrade performance. Another alternative is to store all data types in the same register file. In this case, however, the processor typically reads from and writes to the register file using the largest available data type, which may consume a large amount of power. For example, if the largest data type available is 32 bits, the size of each register in the register file is 32 bits. 16-bit and 8-bit data types also use the same 32-bit registers and all access to the register file are for 32 bits, regardless of the data type.

In instruction set processors, data is typically stored in one or more register files. *See* D.A. Patterson and J.L. Hennessy, Computer Organization & Design: The Hardware/Software Interface, Second Edition, Morgan Kaufmann Publishers, 1998. Figure 2 shows a register file with one combined read/write port, k address bits, and *n* data bits. This register file stores a total of 2^{k} *x n* bits of data as 2^{k} *n*-bit registers. The *n* data bits correspond to the data that is read from or written to the register file. The *k* address bits indicate the location of the register to be accessed. The enable control signal indicates if the register file should be enabled. The read/write control signal indicates whether the register file should be read or written. The address to the register file is decoded and is used in conjunction with the enable and read/write control signals to determine if a particular register file should be read or written. Register file implementations typically vary based on the number of registers, the size of the registers, the number of read and write ports, and the type of control signals. *See* N.H.E. Weste and Kamran Eshraghian, Principals of CMOS VLSI Design: A Systems Perspective, Second Edition, AT&T, 1993.

EP 0 945 783 A discloses a digital processor with the features in the preamble of present claim 1. WO 03/085516 A relates to another prior art of using bank register files to store data elements of individual bit lengths.

The present invention resides in a processor as defined in claim 1 and a method as defined in claim 3. The dependent claims relate to preferred embodiments.

With the present disclosed apparatus and method, a single register file can store a variety of data types including integers, fractions, and mixed numbers with different sizes. Compared to storing the different data types in different register files, this approach reduces area and power dissipation. To further reduce power dissipation, the register file can be partitioned into segments or fields, such that only the relevant portions of the register file are accessed (*i*.*e*., read or written) when a particular data type is accessed.

The present disclosure is a digital processor including a data file having *n* data bits and *k* address bits. The data file has a data port, an address port and at least one read/write port. The *n* data bits are divided into *m* fields; and *m* enable ports such that one or more fields can be enabled for each address. *n* may represent the number of bits of the maximum bit data type that the processor is designed to accommodate. The number of data bits *nⱼ* of the minimum field may equal the number of bits of the minimum bit data type that the processor is designed to accommodate. The number of data bits *nⱼ* of each field j is selected to accommodate a plurality of different data bit *nⱼ* data types when enabled individually or in combination.

The data file may be a register data file. The data file accommodates at least two of the following fixed point data types: integers, fractions and mixed numbers. The integer portion and the fraction portion of a mixed number are in two adjacent fields. Each field j has *nⱼ* data bits and only the number of fields necessary for a selected data type are enabled for each read/write operation.

The disclosure is also a method of operating a digital processor which includes a data file having *n* data bits divided into *m* fields, each field *j* has *nⱼ* data bits, and *k* address bits. The method includes addressing an entry in the data file; and enabling only the number of fields necessary for a selected data type for each read/write operation.

These and other aspects of the present invention will become apparent from the following detailed description of the invention, when considered in conjunction with the accompanying drawings.

### BRIEF DESCRIPTION OF THE DRAWINGS

Figure 1 depicts a variety of common data types including integers, fractions, and mixed numbers with different sizes.
Figure 2 depicts a conventional 2^{k}- word by *n*-bit register file with one read/write port.
Figure 3 depicts a register partitioned into multiple fields according to the present disclosure.
Figure 4 depicts a 64-bit register partitioned into four fields according to the present disclosure.
Figure 5 depicts a 40-bit register partitioned into three fields according to the present disclosure.
Figure 6 depicts a register file that is partitioned into multiple smaller register files, where each register can be enabled individually.

### DETAILED DESCRIPTION OF THE PREFERRED EMBODIMENTS

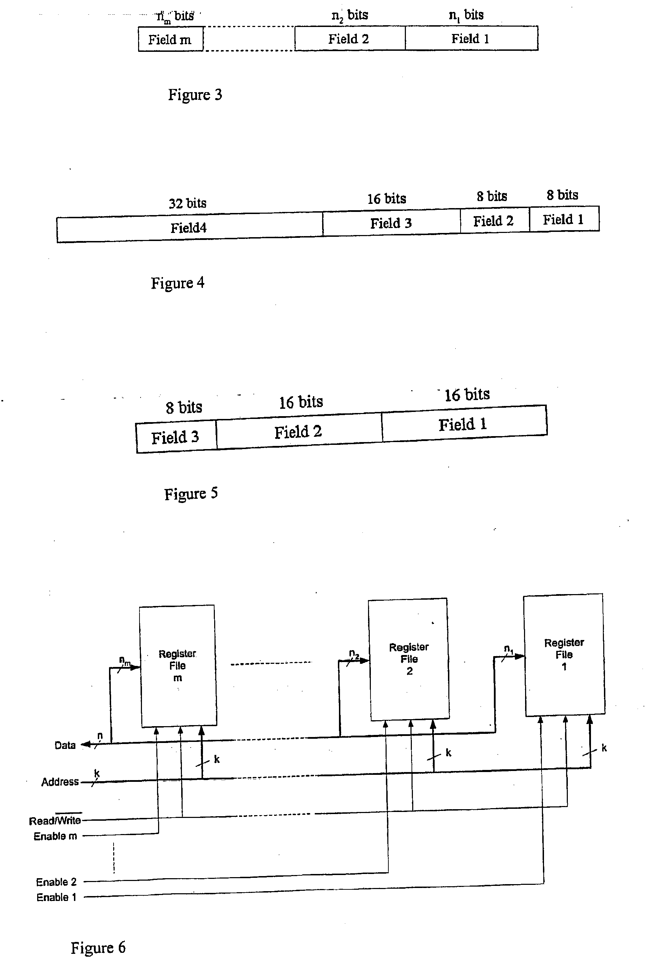

The invention is a method and apparatus for efficiently storing multiple data types in a computer's register or data file. Compared to previous techniques, a single register or data file is used to store multiple data types and only the necessary portions of the register file are read or written. One method for accomplishing this is illustrated in Figure 3, which shows a single register within the register file that has been partitioned into multiple fields, where *m* denotes the total number of fields. Each of the fields can vary in size and there can be an arbitrary number of fields. The number of bits in Field j as denoted in *nⱼ.* The sum of the lengths of the fields (*n*₁ + *n*₂ +...*nⱼ*) should be as large as the largest data type to be stored in the register file. Furthermore, the registers should be partitioned such that each data type can be accessed (read or written) by accessing one or more fields.

As an example of the invention, consider a processor that supports 8-bit, 16-bit, 32-bit and 64-bit integers. Since the size of the largest data type is 64 bits, each register should also be 64 bits in order to store any data type. As shown in Figure 4, each 64-bit register can be divided into four fields; two 8-bit fields, Field 1 and Field 2, one 16-bit field, Field 3, and one 32-bit field, Field 4 8-bit integers are stored in Field 1. 16-bit integers are stored in Fields 1 and 2. 32-bit integers are stored in Fields 1 through 3. And 64-bit integers are stored in Fields 1 through 4. When accessing the register file for a particular data type, only the corresponding fields need to be enabled or accessed.

As a second example of the invention, consider a processor that supports 16-bit and 32-bit integers and fractions, and 24-bit and 40-bit mixed numbers with 8 integer bits. Since the size of the largest data type is 40 bits, each register should also be 40 bits. As shown in Figure 5, each 40-bit register can be divided into three fields; two 16-bit fields, Field 1 and Field 2, and one 8-bit field, Field 3. For integers, the binary point is to the right of Field 1. Thus, 16-bit integers are stored in Field 1 and 32-bit integers are stored in Fields 1 and 2. For the mixed numbers and fractions, the binary point is between Fields 2 and 3. Thus 16-bit fractions are stored in Field 2 and 32-bit fractions are stored in Fields 1 and 2. 24-bit mixed numbers are stored in Fields 2 and 3 and 40-bit mixed numbers are stored in Fields 1 through 3.

Figure 6 shows one possible implementation of an example useful to understand the proposed invention for a register file with one combined read/write port, *k* address bits, and *n* data bits. The same concept can easily be extended to register files with multiple read and write ports, or to other register file configurations. Similar to the register file shown in Figure 2, the register file in Figure 6 stores a total of 2^{k} x *n* bits. It is partitioned into *m* smaller register files, where register file *j* stores 2^{k} x *nⱼ* bits of data as 2^{k} *nⱼ*-bit registers. The register file is partitioned in the same manner as the individual registers, illustrated in Figure 3. Register file j receives all of the address bits, the read/write signal, their own *nⱼ* bits of data, and their own enable signal. The enable signals are set based on the data type being accessed so that only the appropriate portions of the register file are read or written.

Although the present invention has been described and illustrated in detail for register files, it is to be clearly understood that this is done by way of illustration and example only and is not to be taken by way of limitation, the principles are also applicable to other data files. Although the number of data bits of *nⱼ-* of the fields *j* are shown as integer multiples of each other, for example, 8, 16, 32, 64, other filed lengths may be used. The scope of the present invention is to be limited only by the terms of the appended claims.

## Claims

1. A digital processor including a data file, the data file comprising:
a data port;
an address port;
at least one read/write port configured to receive a read/write control signal to indicate whether the data file should be read or written;
a plurality of entries each entry having an address and partitioned into a plurality of fields; and
a plurality of enable ports,
wherein
said plurality of fields are each configured to have a number of data bits selected to accomodate a plurality of different data bit data types, and
the enable ports are adapted to enable one or more of the fields for each address, wherein the number of said one or more enabled fields is only the number of fields necessary for a selected data type.

2. The processor of Claim 1, wherein the processor is adapted to store bits in the fields of an addressed entry based on the number of bits of the data type to be stored.

3. A method of operating a digital processor, the method comprising:
addressing an entry in a data file wherein the entry is divided into a plurality of fields, said plurality of fields each having a number of data bits selected to accomodate a plurality of different data bit data types; and
enabling, by a plurality of enable ports, one or more of the fields in the addressed entry to store or retrieve data, the number of said one or more enabled fields being only the number of fields necessary for a selected data type.

4. The processor of Claim 1, wherein each entry has a total bit length equal to a number of data bits of a maximum bit data type that is stored by the processor.

5. The processor of Claim 4, wherein the number of data bits of a field having a minimum length equals the number of data bits used to represent a minimum bit data type that is stored by the processor.

6. The processor of Claim 1 or 4, wherein each field is configurably selectable for each address.

7. The processor of Claim 1, wherein the data file is a register data file.

8. The processor of Claim 1, wherein the data file can store at least two of the following fixed point data types: integers, fractions and mixed numbers.

9. The processor of Claim 8, wherein an integer and a fraction portion of a mixed number are in two adjacent fields.

10. The processor of any of Claims 1, 2 and 4-8, wherein the processor includes only one said data file.

11. The processor of Claim 1, wherein the plurality of fields include a first field having a first length and a second field having a second length that is different from the first length.

12. The method of Claim 3, wherein the plurality of fields include a first field having a first length and a second field having a second length that is different from the first length.

## Patentansprüche

1. Digitaler Prozessor mit einer Datendatei, wobei die Datendatei aufweist:
einen Datenport,
einen Adressenport,
wenigstens einen Lese-/Schreibe-Port, der dazu ausgelegt ist, ein Lese-/Schreibe-Steuersignal zu empfangen, um anzugeben, ob die Datendatei gelesen oder geschrieben werden soll,
mehrere Einträge, wobei jeder Eintrag eine Adresse aufweist und in mehrere Felder unterteilt ist, und
mehrere Aktivierungsports,
wobei
die mehreren Felder jeweils dazu ausgelegt sind, eine Anzahl von Datenbits aufzuweisen, die dazu ausgewählt sind, mehrere verschiedene Datenbit-Datentypen aufzunehmen, und
die Aktivierungsports dazu ausgelegt sind, eines oder mehrere der Felder für jede Adresse zu aktivieren, wobei die Anzahl des einen oder der mehreren aktivierten Felder nur die Anzahl der Felder ist, die für einen ausgewählten Datentyp notwendig ist.

2. Prozessor nach Anspruch 1, wobei der Prozessor dazu ausgelegt ist, Bits in den Feldern eines adressierten Eintrags basierend auf der Anzahl von Bits des zu speichernden Datentyps zu speichern.

3. Verfahren zum Betreiben eines digitalen Prozessors, wobei in dem Verfahren:
ein Eintrag in einem Datenfeld adressiert wird, wobei der Eintrag in mehrere Felder unterteilt ist, wobei die mehreren Felder jeweils eine Anzahl von Datenbits aufweisen, die dazu ausgewählt sind, mehrere verschiedene Datenbit-Datentypen aufzunehmen, und
durch mehrere Aktivierungsports eines oder mehrere der Felder in dem adressierten Eintrag aktiviert wird, um Daten zu speichern oder wiederherzustellen, wobei die Anzahl des einen oder der mehreren aktivierten Felder nur die Anzahl von Feldern ist, die für einen ausgewählten Datentyp notwendig ist.

4. Prozessor nach Anspruch 1, wobei jeder Eintrag eine Gesamtbitlänge hat, die gleich einer Anzahl von Datenbits eines maximalen Bitdatentyps ist, der durch den Prozessor gespeichert wird.

5. Prozessor nach Anspruch 4, wobei die Anzahl von Datenbits eines Felds mit einer minimalen Länge gleich der Anzahl von Datenbits ist, die zur Darstellung eines minimalen Bitdatentyps verwendet wird, der durch den Prozessor gespeichert wird.

6. Prozessor nach Anspruch 1 oder 4, wobei jedes Feld konfigurierbar für jede Adresse ausgewählt werden kann.

7. Prozessor nach Anspruch 1, wobei die Datendatei eine Registerdatendatei ist.

8. Prozessor nach Anspruch 1, wobei die Datendatei wenigstens zwei der folgenden Fixpunkt-Datentypen speichern kann: ganze Zahlen, Brüche und gemischte Brüche.

9. Prozessor nach Anspruch 8, wobei eine ganze Zahl und ein Bruchteil eines gemischten Bruchs in zwei angrenzenden Feldern sind.

10. Prozessor nach einem der Ansprüche 1, 2 und 4-8, wobei der Prozessor nur die eine Datendatei aufweist.

11. Prozessor nach Anspruch 1, wobei die mehreren Felder ein erstes Feld mit einer ersten Länge und ein zweites Feld mit einer zweiten Länge umfassen, die verschieden von der ersten Länge ist.

12. Verfahren nach Anspruch 3, wobei die mehreren Felder ein erstes Feld mit einer ersten Länge und ein zweites Feld mit einer zweiten Länge umfassen, die verschieden von der ersten Länge ist.

## Revendications

1. Processeur numérique incluant un fichier de données, le fichier de données comprenant :
un port de données ;
un port d'adresse ;
au moins un port de lecture / écriture configuré de manière à recevoir un signal de commande de lecture / écriture pour indiquer si le fichier de données doit être lu ou écrit ;
une pluralité d'entrées chaque entrée présentant une adresse et étant divisée en une pluralité de champs ; et
une pluralité de ports d'activation,
dans lequel
chaque pluralité de champs est chacune configurée pour avoir un nombre de bits de données sélectionné pour accueillir une pluralité de différents types de données de bits de données ; et
les ports d'activation sont aptes à activer un ou plusieurs des champs pour chaque adresse, dans lequel le nombre dudit un ou plusieurs champs activés est uniquement le nombre de champs requis pour un type de données sélectionné.

2. Processeur selon la revendication 1, dans lequel le processeur est apte à stocker des bits dans les champs d'une entrée adressée sur la base du nombre de bits du type de données à stocker.

3. Procédé d'exploitation d'un processeur numérique, le procédé comprenant :
adresser une entrée dans un fichier de données dans lequel l'entrée est divisée en une pluralité de champs, chaque pluralité de champs ayant un nombre de bits de données sélectionné pour accueillir une pluralité de différents types de données de bits de données ; et
activer, par le biais d'une pluralité de ports d'activation, un ou plusieurs des champs de l'entrée adressée pour stocker ou extraire des données, le nombre dudit un ou plusieurs champs activés étant uniquement le nombre de champs requis pour un type de données sélectionné.

4. Processeur selon la revendication 1, dans lequel chaque entrée a une longueur de bits totale égale à un nombre de bits de données d'un type de données de bits maximum qui est stocké par le processeur.

5. Processeur selon la revendication 4, dans lequel le nombre de bits de données d'un champ ayant une longueur minimale est égal au nombre de bits de données utilisés pour représenter un type de données de bits minimum qui est stocké par le processeur.

6. Processeur selon la revendication 1 ou 4, dans lequel chaque champ est sélectionnable de manière configurable pour chaque adresse.

7. Processeur selon la revendication 1, dans lequel le fichier de données est un fichier de données de registre.

8. Processeur selon la revendication 1, dans lequel le fichier de données peut stocker au moins deux des types de données à points fixes suivants : des nombres entiers, des fractions et des nombres fractionnaires.

9. Processeur selon la revendication 8, dans lequel un nombre entier et une partie de fraction d'un nombre fractionnaire se trouvent dans deux champs adjacents.

10. Processeur selon l'une quelconque des revendications 1, 2 et 4 à 8, dans lequel le processeur inclut un seul dit fichier de données.

11. Processeur selon la revendication 1, dans lequel la pluralité de champs inclut un premier champ présentant une première longueur et un deuxième champ ayant une deuxième longueur différente de la première longueur.

12. Procédé selon la revendication 3, dans lequel la pluralité de champs inclut un premier champ présentant une première longueur et un deuxième champ présentant une seconde longueur différente de la première longueur.
